# EUROPÄISCHE PATENTSCHRIFT

(11) **EP 2 614 706 B1**
(45) Veröffentlichungstag und Bekanntmachung des Hinweises auf die Patenterteilung: **13.01.2016**
(21) Anmeldenummer: 13151151.1
(22) Anmeldetag: 14.01.2013
(51) Int. Cl.: A01K 1/00, F24F 7/02

(54) **Firstkonstruktion**
Roof ridge construction
Construction de faîtière

(30) Priorität: 16.01.2012 DE 202012100137 U
(43) Veröffentlichungstag der Anmeldung: 17.07.2013
(73) Patentinhaber: Wolf System GmbH, 94486 Osterhofen (DE)
(72) Erfinder: Zettl, Markus, 94486 Osterhofen (DE)
(74) Vertreter: Benninger, Johannes

(56) Entgegenhaltungen:
- CH-A- 430 117
- DE-A1- 3 113 280
- DE-A1- 4 201 093
- DE-U1- 29 614 618

## Beschreibung

Die vorliegende Erfindung betrifft eine Firstkonstruktion gemäß den Merkmalen des Oberbegriffes des Anspruches 1.

### Stand der Technik

Besonders in der Agrarindustrie, beispielsweise in Ställen, ist es wichtig, die Gebäude gut durchlüften zu können. Dementsprechend werden im Firstscheitel oft Firstsysteme konstruiert bzw. eingebaut, welche einen einfachen Luftaustausch ermöglichen. Hierbei gibt es beispielsweise starre Ausführungsformen, welche dauerhaft einen gleichen Öffnungsquerschnitt für den Luftaustausch zur Verfügung stellen. Weiterhin sind regelbare Firstsysteme bekannt, bei denen die Größe der Lüftungsöffnung(en) durch spezielle Einrichtungen jeweils verkleinert oder vergrößern werden können.

Starre Firstausbildungen sind beispielsweise sogenannte Pultdachfirste. Diese werden vorwiegend bei Agrargebäuden, Hallen, Gewächshäuser usw. eingesetzt, um den Stall bzw. das Gebäude mit Frischluft zu versorgen bzw. die Abluft entweichen zu lassen. Diese sogenannten Pultdachfirste zeichnen sich dadurch aus, dass eine erste Dachfläche einer Seite über die zweite, andere Dachfläche hinaus ragt. In der Regel wird die auskragende Dachfläche über den Firstscheitel gezogen und das obere Ende der anderen Dachfläche vom Firstscheitel zurückgesetzt angeordnet. Diese Art von First ist sehr einfach zu konstruieren und sehr effektiv da der Windstrom die abweichende Luft nicht abschneiden kann und sogar mitzieht, wenn dieser über die auskragende Dachfläche weht. Zudem kann Regen und Schnee kaum in die Öffnung eindringen.

Weiterhin sind regelbare Firstsysteme bekannt, bei denen die Größe der Lüftungsöffnung eingestellt werden kann. Beispielsweise beschreibt EP1243176 eine Firstentlüftungsvorrichtung für die Stallentlüftung, wobei die Entlüftungsöffnung durch mindestens zwei Schwenkklappen gebildet wird, die durch auseinander schwenken eine vertikal nach oben offene Entlüftungsöffnung bilden.

DE9319277 betrifft eine Dachfirstanordnung für Stallbauten mit einer Lüftungsöffnung im Firstbereich und lichtdurchlässigen Abdeckplatten. Die Oberkante des Dachfirstes wird durch eine Profilschiene gebildet, an der die Abdeckplatten schwenkbar gelagert sind. Durch Teleskopstangen können die Abdeckplatten zum Öffnen nach oben geschwenkt werden, so dass seitliche Lüftungsöffnungen gebildet werden.

Figur 3 in CH 430117 A offenbart eine Firstkonstruktion gemäß dem Oberbegriff des Anspruchs 1.

Bei den beschriebenen Systemen erfolgt beim Öffnen der Abdeckflächen immer eine Bewegung derselben von der Dachfläche weg. Durch die dabei entstehende Lüftungsöffnung können Regen oder Schnee ungehindert ins Gebäude eintreten. Ein weiterer Nachteil dieser Systeme besteht darin, dass die Firste bei geöffnetem Zustand eine instabile Stellung einnehmen. Die Konstruktion muss somit sehr stabil ausgeführt werden. Alternativ müssen Mittel vorgesehen sein, die beispielsweise bei zu starkem Wind o.ä. zu einem automatischen Schließen führen. Dadurch soll verhindert werden, dass die Abdeckplatten beschädigt werden. Aus diesem Grund ist beispielsweise bei starker Windbelastung im Sommer eine Belüftung der Gebäude nicht immer möglich.

Weiterhin sind Firstsysteme bekannt, die durch Drehklappen, aufblasbare Schläuche, wickelbare Folien oder durch vertikal verschiebbare Flächen den Luftstrom bzw. dir Größe der Lufteintrittsöffnung regulieren.

Aufgabe der Erfindung ist, eine funktionssichere und kostengünstige Dachfirstanordnung für Stallbauten o.ä. zu konstruieren, mit denen der Luftaustausch einfach regulierbar ist.

Die obige Aufgabe wird durch eine Firstkonstruktion gelöst, welche die Merkmale in dem Schutzanspruch 1 umfasst. Weitere vorteilhafte Ausgestaltungen werden durch die Unteransprüche beschrieben.

### Beschreibung

Die erfindungsgemäße Firstkonstruktion ist vorgesehen für einen überdachten Nutzraum und/oder ein überdachtes Gebäude und umfasst wenigstens zwei zueinander geneigte und einen Firstbereich bildende Dachflächen, in welchem Firstbereich eine erste Längskante einer ersten Dachfläche eine zweite Längskante einer zweiten Dachfläche in vertikaler Richtung unter Ausbildung einer Öffnung überragt. Die Firstkonstruktion besitzt einen Dachscheitel, über welchen die erste Dachfläche mit ihrer ersten Längskante hinausragt und welchen Dachscheitel die zweite Dachfläche mit ihrer zweiten Längskante nicht vollständig erreicht. Die erste Längskante kann vorzugsweise parallel zur zweiten Längskante orientiert sein. Zudem können sich die erste Längskante und/oder die zweite Längskante parallel zum Dachscheitel erstrecken.

Die Öffnung kann in einer bevorzugten Ausführungsform als Be-und Entlüftungsöffnung für den Nutzraum und/oder das Gebäude ausgebildet sein.

Weiter ist eine schwenkbare Klappe vorgesehen, die im Bereich der zweiten Dachfläche zwischen wenigstens zwei stabilen Endlagen zur Variation eines Öffnungsquerschnitts und/oder zum Verschließen der Öffnung schwenkbar gelagert ist.

Beispielsweise kann es sein, dass bei einer ersten der wenigstens zwei stabilen Endlagen eine Öffnung mit erstem Öffnungsquerschnitt vorhanden ist, bei einer zweiten der wenigstens zwei stabilen Endlagen eine Öffnung mit weiterem Öffnungsquerschnitt vorhanden ist und bei einer dritten der wenigstens zwei stabilen Endlagen die Öffnung zumindest annäherungsweise vollständig verschlossen ist.

Die Klappe ist an der zweiten Dachfläche schwenkbar gelagert. Beispielsweise kann die Klappe hierzu über Gelenkverbindungen an der zweiten Dachfläche angeordnet sein. Insbesondere haben sich Ausführungsformen bewährt, bei welchen die Klappe im Bereich der zweiten Längskante schwenkbar gelagert ist.

Weiter kann sich eine Schwenkachse der schwenkbaren Klappe im Wesentlichen parallel zur ersten und zweiten Längskante der ersten und zweiten Dachfläche erstrecken. Besitzt die Dachfläche zudem einen Dachscheitel, so kann es sein, dass sich die Schwenkachse parallel zum Dachscheitel erstreckt.

In einer bevorzugten Ausführungsform kann es sein, dass die schwenkbare Klappe bei einer der wenigstens zwei stabilen Endlagen die Öffnung im Wesentlichen vollständig verschließt und hierzu vorzugsweise im Bereich der ersten Längskante an der ersten Dachfläche anliegt.

Beispielsweise kann die schwenkbare Klappe eine weitere Längskante besitzen, welche weitere Längskante bei vollständigem Verschließen der Öffnung an der ersten Längskante und/oder im Bereich der ersten Längskante an der ersten Dachfläche anliegt.

Demnach kann sich die schwenkbare Klappe bei einer der wenigstens zwei stabilen Endlagen derart in Richtung der ersten Dachfläche erstrecken, dass die schwenkbare Klappe die erste Dachfläche genau oder zumindest annäherungsweise erreicht und die Öffnung im Wesentlichen verschlossen ist, während die schwenkbare Klappe bei den weiteren stabilen Endlagen die erste Dachfläche nicht erreicht und die Öffnung mit definiertem Öffnungsquerschnitt ausgebildet ist.

Auch kann es sein, dass bei einer der wenigstens zwei stabilen Endlagen der schwenkbaren Klappe eine vertikale Öffnung zwischen der ersten Dachfläche und der zweiten Dachfläche ausgebildet ist.

Denkbar ist zudem, dass die schwenkbare Klappe bei einer der wenigstens zwei stabilen Endlagen zur Ausbildung einer Öffnung mit definiertem Öffnungsquerschnitt im Wesentlichen parallel zur zweiten Dachfläche orientiert ist. Hierbei kann die Öffnung als Längsöffnung ausgebildet sein, die sich in Richtung der ersten und der zweiten Längskante erstreckt.

Weiter kann im Bereich der ersten Längskante der ersten Dachfläche ein Dichtelement angeordnet sein, dass beispielsweise durch ein abgewinkeltes Blech ausgebildet ist.

In bevorzugten Ausführungsformen kann die schwenkbare Klappe zumindest teilweise durch transparentes Materials ausgebildet sein. Beispielsweise eignen sich hierzu Glas, Plexiglas, Kunststoff und/oder Folie.

Um zwischen den stabilen Endlagen über eine Schwenkbewegung der Klappe wechseln zu können, kann die schwenkbare Klappe mit einem Zahnstangengetriebe in Wirkverbindung gebracht sein. Vorstellbar ist, dass das Zahnstangengetriebe zur Schwenkbewegung der Klappe händisch betätigbar ist. Insbesondere haben sich jedoch Ausführungsformen bewährt, bei welchen das Zahnstangengetriebe zur Schwenkbewegung der Klappe mit einem motorischen Aktor - wie beispielsweise einem Elektromotor - in Verbindung steht. Das Zahnstangengetriebe kann eine Zahnstange umfassen, welche mit einem freien Ende an der schwenkbaren Klappe fixiert ist.

Der Nutzraum und/oder das Gebäude kann insbesondere als landwirtschaftlich genutztes Gebäude bzw. als landwirtschaftlich genutzter Nutzraum, wie, Stallungen, Speicher etc. ausgebildet sein. Ebenso ist die erfindungsgemäße Firstdachkonstruktion für weitere Gebäude und / oder Nutzräume geeignet, bei welchen eine gute und regulierbare Durchlüftung benötigt wird.

Die erste Dachfläche kann in einer ersten Dachflächenebene und die zweite Dachfläche kann in einer zweiten Dachflächenebene angeordnet sein. Die beiden Ebenen können gemeinsame im Schnittbereich einen Dachscheitel der Firstdachkonstruktion definieren.

Die erste und die zweite Dachfläche können jeweils von einer unteren Längskante begrenzt sein. Auch die unteren Längskanten können parallel zum Dachscheitel verlaufen. Die obere Längskante der ersten Dachfläche kann oberhalb des Dachscheitels angeordnet sein, während die obere Längskante der zweiten Dachfläche unterhalb des Dachscheitels angeordnet sein kann. Die erste Dachfläche kann somit auskragend, d.h. über den Firstscheitel hinausragend, ausgebildet sein, während die zweite Dachfläche vom Dachscheitel zurück versetzt angeordnet sein kann.

Mit Hilfe der schwenkbaren Klappe kann eine Lüftungsöffnung variabler Größe eingestellt werden. Die schwenkbare Klappe kann bei einer ersten der wenigstens zwei stabilen Endlagen, bei welcher die Öffnung zumindest annäherungsweise verschlossen ist, in einer dritten Dachflächenebene angeordnet sein, so dass eine weitere Längskante der schwenkbaren Klappe unmittelbar an die erste Dachfläche oder an die Längskante der ersten Dachfläche grenzt. Die dritte Dachflächenebene kann mit einer darunter angeordneten horizontalen Ebene einen Winkel einschließen, der größer ist als der Winkel zwischen der zweiten Dachflächenebene und der darunter angeordneten horizontalen Ebene. D.h. die schwenkbare Klappe kann bei verschlossener Öffnung stärker gegenüber der Horizontalen geneigt sein als die zweite Dachfläche.

Durch eine nach unten gerichtete Schwenkbewegung der Klappe aus einer ersten stabilen Endlage, bei welcher die Öffnung zumindest annäherungsweise verschlossen, wird eine Öffnung mit definiertem Öffnungsquerschnitt ausgebildet. Insbesondere kann eine Endlage der Klappe vorgesehen sein, bei welcher eine Längsöffnung ausgebildet ist, die sich in Richtung der ersten und der zweiten Längskante erstreckt. Hierbei kann die Klappe in einer vierten Dachflächenebene angeordnet sein, die mit der vorherig erwähnten zweiten Dachflächenebene überlagert sein kann oder sich weitgehend parallel zur dieser erstreckt. D.h. die schwenkbare Klappe kann bei dieser Endlage in etwa mit demselben Winkel gegenüber einer Horizontalen geneigt sein wie die zweite Dachfläche.

Vorzugsweise kann entlang der oberen Längskante der ersten Dachfläche eine entgegengesetzt zur ersten Dachfläche geneigte Abschlusseinrichtung, insbesondere ein Abschlussblech oder Schutzblech, angeordnet sein. Bei einer ggf. vorhandenen verschlossenen Öffnung kann es sein, dass eine weitere Längskante der Klappe unterhalb des Abschlussbleches angeordnet ist. Vorzugsweise kann die weitere Längskante der Klappe weitgehend an das Abschlussblech anstoßen bzw. mit dem Abschlussblech in Oberflächenkontakt stehen, so dass das Satteldach dicht abschließt. Die Abschlusseinrichtung kann vorzugsweise ein Blech o.ä. sein, kann aber auch aus einem anderen geeigneten Material bestehen.

Gemäß einer weiteren Ausführungsform der Erfindung kann auf ein solches Abschlussblech verzichtet werden. Stattdessen können die Längskante der ersten Dachfläche und eine weitere Längskante der Klappe bei verschlossener Öffnung zusammenstoßen.

Es kann darüber hinaus sein, dass aus einer ersten Endlage, bei welcher die Öffnung zumindest annäherungsweise verschlossen ist, durch ein nach oben gerichtetes Verschwenken der Klappe ein Wechsel bzw. Übergang in eine weitere Endlage möglich ist. Bei dieser weiteren Endlage kann es sein, dass die Klappe in einer fünften Dachflächenebene angeordnet ist, wobei der Winkel zwischen der fünften Dachflächenebene und einer darunter angeordneten horizontalen Ebene größer ist als der Winkel zwischen der zweiten Dachflächenebene und/ oder der dritten Dachflächenebene und der darunter angeordneten horizontalen Ebene und wobei der Winkel der fünften Dachflächenebene und einer darunter angeordneten horizontalen Ebene größer ist als der Winkel zwischen der vierten Dachflächenebene und der darunter angeordneten horizontalen Ebene. Hierbei kann eine vertikale Öffnung entstehen.

Insbesondere können über einen entsprechenden Öffnungs- bzw. Schließmechanismus beliebige Positionen der schwenkbaren Klappe zwischen einer verschlossenen Öffnung und einer Öffnung mit definiertem Öffnungsquerschnitt eingestellt werden.

Gemäß einer alternativen Ausführungsform ohne Abschlussblech können über einen ggf. vorhandenen Öffnungs- bzw. Schließmechanismus beliebige Positionen der schwenkbaren Klappe zwischen der Endlage mit vertikaler Öffnung und der Endlage mit Längsöffnung eingestellt werden.

Die schwenkbare Klappe kann aus einem beliebigen geeigneten Material bestehen. Wie vorhergehend erwähnt, kann diese aus Glas, Plexiglas oder Kunststoff gebildet sein, d.h. insbesondere aus einem transparenten und / oder lichtdurchlässigen Material bestehen. Weiterhin kann eine Folie, insbesondere eine verstärkte transparente und / oder lichtdurchlässige Kunststofffolie, verwendet werden.

Die erfindungsgemäße Firstdachkonstruktion erlaubt eine regulierbare Belüftung von Gebäuden. Auch erlaubt die erfindungsgemäße Firstdachkonstruktion selbst bei nicht verschlossener Öffnung eine Belüftung bei starkem Wind oder Sturm. Insbesondere bei vorherig beschriebener Ausbildung einer Längsöffnung kann die schwenkbare Klappe geschützt sein, da die schwenkbare Klappe hierzu nicht über den Firstbereich in vertikaler Richtung hinausragen muss. Die erfindungsgemäße Firstdachkonstruktion vereint somit die Vorteile des herkömmlichen, so genannten Pultdachfirstes mit einer Regelbarkeit der Lüftungsöffnung.

Die erfindungsgemäße Firstdachkonstruktion kann als sog. Pultdachfirst ausgebildet sein, bei dem eine Dachfläche über die andere Dachfläche auskragt und im Bereich einer Öffnung, welche hierdurch entsteht, eine heb- und senkbare Klappe angeordnet ist. Diese Klappe kann vorzugsweise aus lichtdurchlässigem Material bestehen.

Die bewegbare Klappe kann an einer unteren, Seite mit einer Hebe-und Senkvorrichtung in Verbindung stehen.

In einer Endlage der schwenkbaren Klappe, bei welcher eine Längsöffnung ausgebildet ist, kann es sein, dass die schwenkbare Klappe hierauf durch Anheben in eine weitere Endlage überführt wird. Hierbei kann es sein, dass der Öffnungsquerschnitt bei der weiteren Endlage verringert ausgebildet ist. Somit kann mehr warme Luft im Stall bzw. Gebäude und/oder Nutzraum gehalten werden bzw. kalte Luft kann von außen nicht mehr so leicht einströmen. Die schwenkbare Klappe kann hierauf noch weiter angehoben werden bis sich der Öffnungsquerschnitt derart verringert, dass die Öffnung zumindest annäherungsweise verschlossen ist.

Je nach gewählter Ausführung besteht ggf. die Möglichkeit, den Dachfirst komplett abzudichten. Bei einer bevorzugten Ausführungsform kann die schwenkbare Klappe derart ausgebildet sein, dass diese in einer Endlage mit einer weiteren Längskante an die erste Dachfläche von unten anschlägt und somit die schwenkbare Klappe bei dieser Endlage stabil unter der starren Fläche angeordnet ist.

Durch die mögliche Kombination aus so genanntem Pultdachfirst mit heb- und senkbarer bzw. schwenkbarer Klappe kann die erfindungsgemäße Firstdachkonstruktion bei nicht verschlossener Öffnung im Gegensatz zu bekannten Systemen sehr stabil ausgebildet sein. Der Wind streicht durch den Pultdachfirst über die zurückgesetzte Fläche. Die schwenkbare Klappe kann der Dachfläche angenähert sein und befindet sich somit in einer stabilen Position bzw. Endlage. Bekannte Systeme müssen dagegen zum Vergrößern der Belüftungsöffnung bewegliche Flächen in vertikaler Richtung über den Dachfirst hinaus bewegen, wodurch diese eine stabile Position verlassen.

Auch bei ggf. vorhandener verschlossener Öffnung, kann in diversen Ausführungsformen der vorliegenden Erfindung durch die Firstdachkonstruktion eine sehr stabile Position der schwenkbaren Klappe erreicht werden. Ist die schwenkbare Klappe in einer Endlage so angeordnet, dass diese unter einer auskragenden Dachfläche positioniert wird, kann die Klappe durch Wind oder Sog nicht weggerissen werden, da die Klappe an die auskragende Dachfläche ansteht. Hierdurch kann die Konstruktion und eine Hebe- und Senkvorrichtung für die Klappe leichter und kostengünstiger ausgeführt werden.

Eine alternative Ausführung sieht vor, dass die schwenkbare Klappe über die Endlage bei verschlossener Öffnung hinausfahren und somit der Öffnungsquerschnitt nochmals erheblich vergrößert werden kann. Diese Funktion ist insbesondere in Breitengraden vorteilhaft, welche extreme Hitzeperioden haben, so dass der in herkömmlicher Weise mögliche Öffnungsquerschnitt zur Entlüftung nicht mehr ausreicht. Die voran beschriebene sichere Position der geöffneten bzw. geschlossenen Stellung wird hierbei verlassen und es ist denkbar, dass bei dieser Funktion die Bauteile durch die höhere Belastung bei Wind stärker ausgeführt werden müssen.

Auch kann ein Überwachungssystem vorgesehen sein, dass bei starken Windverhältnissen ein automatisches Verschließen der Öffnung durch die schwenkbare Klappe bewirkt. Oder aber die schwenkbare Klappe wird noch weiter abgesenkt, um eine Öffnung auszubilden.

Eine Hebe- und Senkvorrichtung kann vorzugsweise aus mindestens einer Zahnstange und einer Welle ausgebildet sein bzw. mindestens eine Zahnstange und eine Welle umfassen. Für den Fachmann ist jedoch klar, dass auch andere geeignete Mechanismen verwendet werden können. Der Antrieb kann beispielsweise über Handwinden, elektromotorisch o.ä erfolgen.

Zur Schwenkbewegung kann die Klappe beispielsweise mit ein oder mehreren Scharnieren in Verbindung stehen. Auch hier sind zahlreiche Mechanismen, unter anderem aus dem Gewächshaus- oder Stallbereich, bekannt und anwendbar. Die Anordnung der Klappe muss nicht zwingend im Bereich der Längskante der zweiten Dachfläche ausgebildet sein. Bei der erfindungsgemäßen Firstkonstruktion ist wichtig, dass die Klappe schwenkbar ausgebildet ist.

Ein weiterer Vorteil der erfindungsgemäßen Firstkonstruktion besteht darin, dass die Regensicherheit deutlich höher ist als bei bekannten regelbaren Firstsystemen. Bei bekannten Firstsystemen werden bewegliche Flächen meist von der Dachfläche weg geöffnet. Dies vergrößert die Fläche, durch die Regen oder Schnee senkrecht einfallen kann, so dass diese Systeme bei Regen oder Schnee nur bedingt einsetzbar sind. Einfallender Schnee und / oder Regen ist insbesondere problematisch, wenn im Gebäude unterhalb des Firstes bspw. Futterplätze, Technikräume, Lagerstätten usw. liegen. Durch die Öffnungsanordnung des bekannten, so genannten Pultdachfirstes ist der Regeneintritt stark minimiert bzw. ausgeschlossen. Hierzu ist es vorteilhaft, wenn der First so angeordnet wird, dass die Hauptwetterrichtung gegenüber der Öffnung liegt und somit die Öffnung durch die auskragende Dachfläche des Pultdachfirstes geschützt wird. Allerdings ist die Öffnung beim bekannten Pultdachfirst immer offen und kann nicht reguliert und / oder verschlossen werden.

Die schwenkbare Klappe kann aus Materialien bestehen, die standardmäßig zur Eindeckung von Dächern verwendet werden. Alternativ kann die schwenkbare Klappe auch aus anderen Werkstoffen, bspw. einem Plattenwerkstoff o.ä. oder aus Kombinationen von Werkstoffen oder Konstruktionen mit Werkstoffen gebildet werden.

Vorzugsweise ist die schwenkbare Klappe zumindest teilweise aus einem lichtdurchlässigen oder transparenten Baustoff gebildet. Aus Sicht des Brandschutzes kann die schwenkbare Klappe auch durch Werkstoffe mit besonderen Eigenschaften, bspw. abschmälzend für Rauchabzug etc., ausgeführt werden.

Um die Montage zu erleichtern kann die schwenkbare Klappe vormontiert zur Verfügung gestellt werden. Hierdurch wird die Montage auf dem Dach sehr stark verkürzt, was auch zur Arbeitssicherheit und der Montagequalität beiträgt. Die vormontierten Flächensegmente können an den kurzen Längsseiten der Flächen miteinander verbunden werden.

Weiter kann es sein, dass sich die erfindungsgemäße Firstkonstruktion nicht über ein gesamtes Gebäudedach erstreckt. Beispielsweise ist vorstellbar, dass sich die Firstdachkonstruktion und die erste Längskante seiner ersten Dachfläche sowie die zweite Längskante seiner zweiten Dachfläche um einen definierten Betrag und abschnittsweise entlang eines Firstscheitels erstrecken. Beidseitig der Firstkonstruktion kann eine Dachkonstruktion angeordnet sein, die ortsfest installiert und kein Bestandteil der erfindungsgemäßen Firstkonstruktion ist. Die Firstkonstruktion kann bei dieser Ausführungsform mit weiteren ortsfesten Bestandteilen zusammen ein Gebäudedach bilden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Darstellung eines bekannten so genannten Pultdachfirstes;
Figur 2 und Figur 5 zeigen eine schematische Darstellung einer Ausführungsform einer erfindungsgemäßen Firstkonstruktion mit schwenkbarer Klappe in einer ersten stabilen Endlage;
Figur 3 und Figur 6 zeigen eine schematische Darstellung einer Ausführungsform einer erfindungsgemäßen Firstkonstruktion mit schwenkbarer Klappe in einer zweiten stabilen Endlage;
Figur 4 und Figur 7 zeigen jeweils eine schematische Darstellung einer Ausführungsform einer erfindungsgemäßen Firstkonstruktion mit schwenkbarer Klappe in einer dritten stabilen Endlage;

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

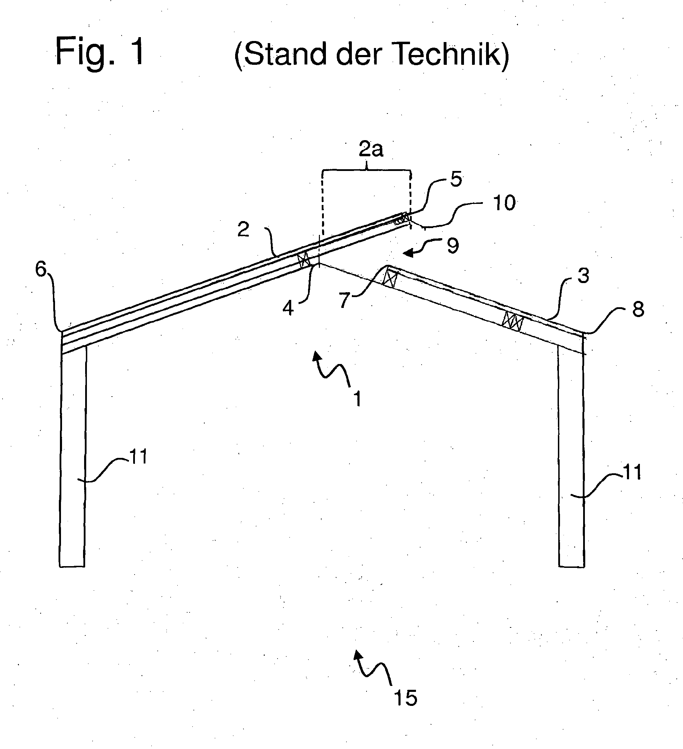

Figur 1 zeigt eine schematische Darstellung eines bekannten so genannten Pultdachfirstes 1. Der Pultdachfirst 1 umfasst eine erste geneigte Dachfläche 2 und eine entgegengesetzt zur ersten Dachfläche 2 geneigte zweite Dachfläche 3. Die erste und die zweite Dachfläche 2, 3 werden jeweils von einer unteren Längskante 6, 8 und einer oberen Längskante 5, 7 begrenzt. Die unteren Längskanten 6, 8 der Dachflächen 2, 3 können jeweils an seitlichen Gebäudewänden 11 ansetzen oder darüber hinaus gezogen werden. Die erste Dachfläche 2 ist im Bereich 2a über den Dachscheitel 4 und die zweite Dachfläche 3 erreicht den Dachscheitel 4 nicht. Dadurch entsteht zwischen den beiden Dachflächen 2, 3 eine Öffnung 9, durch welche das Gebäude 15 be- bzw. entlüftet werden kann. Die Dachflächen 2, 3 können aus jedem bekannten oder denkbaren Eindeckungsmaterialen bestehen, bspw. Ziegel, Blech, Sandwich, Wellfaserplatten und/oder transparenten Materialien wie Folien oder dergleichen. Weiterhin kann vorgesehen sein, dass Bereiche dieser Eindeckung durch transparente Materialien ausgebildet werden, um den Lichteinfall in das Gebäude 15 zu erhöhen. Beim Pultdachfirst 1 werden solche Lichtflächen häufig an den Enden der ersten und / oder zweiten Dachfläche 2, 3 angeordnet. Weiterhin sind auch Ausführungen bekannt, bei welchen vor der Öffnung 9 ein sogenanntes Wind abweisendes Blech (nicht dargestellt) angebracht wird. Dies ist meist von der Öffnung zurückgesetzt auf der zweiten Dachfläche 3, rechtwinklig zur Dachfläche 3 oder lotrecht angeordnet. Problematisch ist hierbei jedoch, dass ein solches Wind abweisendes Blech den Luftaustausch behindert.

An der oberen Längskante 5 der ersten Dachfläche 2 ist ein Dichtblech 10 angeordnet. Dieses ist gegenüber der ersten Dachfläche 2 abgewinkelt und steht in der Neigung der zweiten Dachfläche 3 über. Dies gewährleistet, dass von der oberen Flächenkante 5 abtropfender Regen etc. von der Öffnung 9 abgelenkt wird.

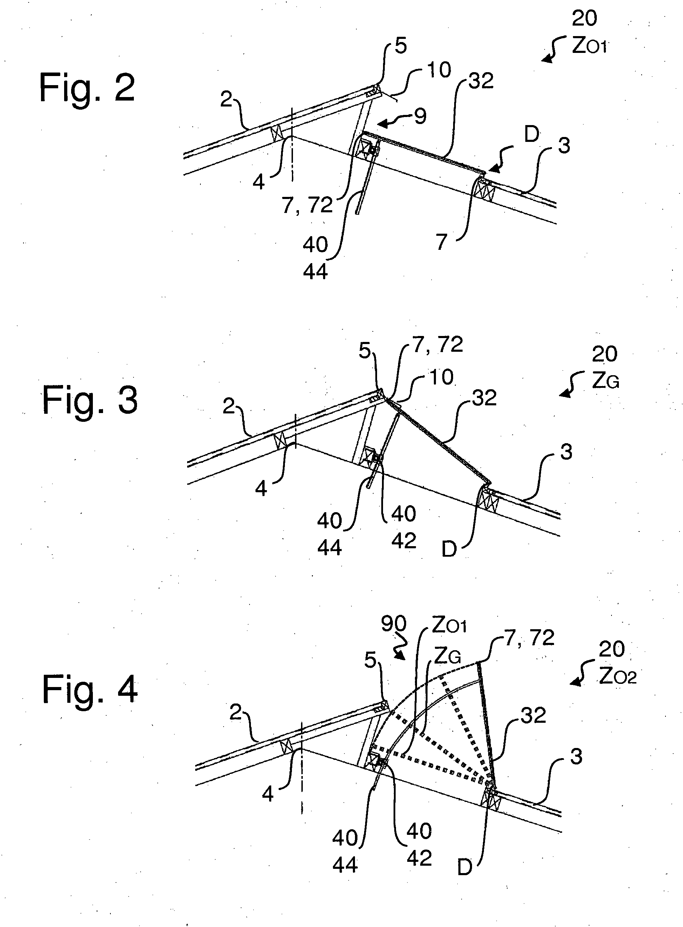

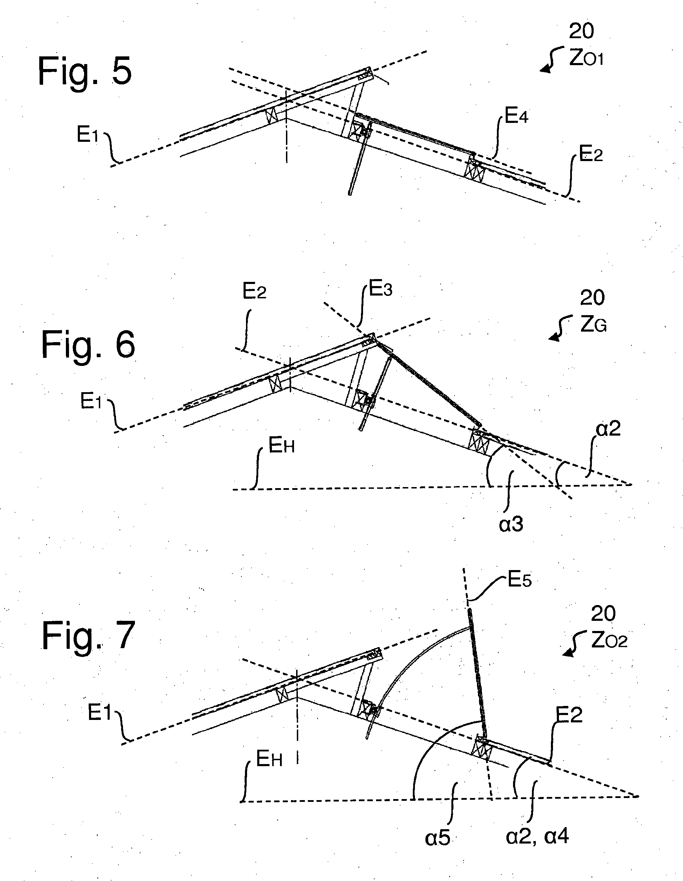

Figur 2 und Figur 5 zeigen eine schematische Darstellung einer Ausführungsform einer erfindungsgemäßen Firstkonstruktion 20 mit schwenkbarer Klappe 32 in einer ersten stabilen Endlage; Z_{O1}. Die Firstdachkonstruktion 20 umfasst eine erste geneigte Dachfläche 2 und eine entgegengesetzt zur ersten Dachfläche 2 geneigte zweite Dachfläche 3. Die erste Dachfläche 2 ist in einer ersten Dachflächenebene E₁ und die zweite Dachfläche 3 ist in einer zweiten Dachflächenebene E₂ angeordnet. Die beiden Ebenen E₁, E₂ schneiden sich in dem so genannten Dachscheitel 4 der Firstdachkonstruktion 20. Die erste und die zweite Dachfläche 2, 3 werden jeweils von einer unteren Längskante 6, 8 (vgl. auch Figur 1) und einer oberen Längskante 5, 7 begrenzt. Diese sind jeweils parallel zum Dachscheitel 4 angeordnet. Die obere Längskante 5 der ersten Dachfläche 2 ist oberhalb des Dachscheitels 4 angeordnet, während die obere Längskante 7 der zweiten Dachfläche 3 unterhalb des Dachscheitels 4 angeordnet ist. Die Längskante 5 des ersten Daches 2 überragt somit die Längskante 7 des zweiten Daches 3 in vertikaler Richtung bzw. die Längskante 5 der ersten Dachfläche 2 befindet sich auf höherem vertikalem Niveau als die Längskante 7 der Dachfläche zweiten Dachfläche 3. Dies bedeutet, dass die erste Dachfläche 2 auskragend, d.h. über den Dachscheitel 4 hinausragend ausgebildet ist, während die zweite Dachfläche 3 vom Dachscheitel 4 zurück versetzt angeordnet ist und den Dachscheitel 4 nicht erreicht.

Die Firstkonstruktion 20 weist eine schwenkbare Klappe 32 auf, die in der dargestellten ersten Endlage Z_{O1} abgesenkt ist. Die dem Dachscheitel 4 zugewandte weitere Längskante 72 der schwenkbaren Klappe 32 verläuft parallel zu Flächenkante 7 der zweiten Dachfläche 3.

Die schwenkbare Klappe 32 ist vorzugsweise als transparente Lichtfläche ausgeführt, wodurch der Lichteinfall ins Gebäude 15 (vgl. Figur 1) zusätzlich verbessert wird. Die schwenkbare Klappe 32 ist im Bereich der Längskante 7 um eine Schwenkachse D drehbar gelagert. Die Schwenkachse D muss sich jedoch nicht zwingend im Bereich der Längskante 7 befinden. Alternativ kann die Schwenkachse D auch nach oben oder unten versetzt sein und beispielsweise durch einen Schwerpunkt der Klappe 32 verlaufen.

Bei erster Endlage Z_{O1} gemäß den Figuren 2 und 5 ist die Klappe 32 in einer vierten Dachflächenebene E₄ angeordnet. Diese vierte Dachflächenebene E₄ verläuft vorzugsweise weitgehend parallel zur zweiten Dachflächenebene E₂ der zweiten Dachfläche 3

Die weitere Längskante 72 der schwenkbaren Klappe 32 kann mittels eines Hebe-und Senkmechanismus 40 angehoben werden. Dabei verkleinert sich die Öffnung 9 zunächst, bis sie schließendlich bei einer aus der Schwenkbewegung resultierenden zweiten stabilen Endlage Z_{G} vollständig verschlossen ist. Erreicht die weitere Längskante 72 die obere Längskante 5 der ersten Dachfläche 2, dann befindet sich die Klappe 32 in der in **Figur 3** und **Figur 6** dargestellten zweiten Endlage Z_{G}.

Weiterhin kann ein Dichtblech 10 an der oberen Längskante 5 der ersten Dachfläche 2 vorgesehen sein, welches in Richtung der zweiten Dachfläche 3 weist. Somit kann bei zweiter Endlage Z_{G} die schwenkbare Klappe 32 an diesem Dichtblech 10 unten anstehen. Das Dichtblech 10 kann Bestandteil der ersten Dachfläche 2 sein. Dadurch wird eine höhere Dichtigkeit der Firstkonstruktion 20 erreicht. Zudem wird durch das Anstehen der Klappe 32 die Stabilität der geschlossenen Firstkonstruktion 20 erhöht, da hierdurch bspw. die Kräfte bei Sogbelastung zusätzlich über die Dachkonstruktion und / oder die erste Dachfläche 2 abgeleitet werden können. Abhängig von der benötigten Stabilität, Dichtigkeit etc. sind unterschiedliche Ausführungen des oberen Dichtblechs 10 denkbar. Es muss sich nicht zwingend um ein abgewinkeltes Blech handeln. Auch andere geeignete Mittel können verwendet werden.

Der Hebe- und Senkmechanismus 40 kann beispielsweise Zahnstangenantriebe, Spindelstangen usw. umfassen. In den Ausführungsbeispielen ist ein Zahnstangenmechanismus vorgesehen. Unterhalb der schwenkbaren Klappe 32 ist eine Welle 42 angeordnet, auf welcher Zahnstangen 44 in bestimmten Abständen montiert sind. Über diesen Hebe- und Senkmechanismus 40 sind zwischen der ersten Endlage Z_{O1} und der zweiten Endlage Z_{G} beliebige Neigungen der Klappe 32 einstellbar. Dadurch kann die Größe eines Öffnungsquerschnitts der Öffnung 9 flexibel eingestellt werden.

In der zweiten stabilen Endlage Z_{G} ist die schwenkbare Klappe 32 in einer dritten Dachflächenebene E₃ angeordnet, so dass die weitere Längskante 72 der Klappe 32 unmittelbar an die erste Dachfläche 2 bzw. die obere Flächenkante 5 der ersten Dachfläche 2 grenzt und ggf. mit dieser in Oberflächenkontakt steht. Die dritte Dachflächenebene E₃ schließt mit einer darunter angeordneten horizontalen Ebene E_{H} einen Winkel α3 ein, der größer ist als der Winkel α2 zwischen der zweiten Dachflächenebene E₂ und der darunter angeordneten horizontalen Ebene E_{H}. D.h. die schwenkbare Klappe 32 ist stärker gegenüber der Horizontalen geneigt als die zweite Dachfläche 3.

**Figur 4** und **Figur 7** zeigen jeweils eine schematische Darstellung einer erfindungsgemäßen Firstkonstruktion 20 mit einer dritten stabilen Endlage Z_{O2} der schwenkbaren Klappe 32. Hierbei ist an der oberen Flächenkante 5 der ersten Dachfläche 2 kein Dichtblech 10 (vgl. Figuren 2, 3, 5, 6) vorgesehen. Dadurch kann die schwenkbare Klappe 32 aus der zweiten stabilen Endlage Z_{G} hinaus angehoben werden und eine so genannte vertikale Öffnung 90 freilegen. Insbesondere bildet die so genannte vertikale Öffnung 90 eine nach oben offene Lüftungsöffnung. In Figur 4 sind mehrere mögliche Stellungen der schwenkbaren Klappe 32 angedeutet, insbesondere die vorherig dargestellte erste stabile Endlage Z_{O1} und die zweite stabile Endlage Z_{G}.

In der zweiten stabilen Endlage Z_{G} stoßen die obere Längskante 5 der auskragenden ersten Dachfläche 2 und die weitere Längskante 72 der schwenkbaren Klappe 32 zusammen. Weiterhin ist die schwenkbare Klappe 32 durch ein über die zweite stabile Endlage Z_{G} hinausgehendes Verschwenken nach oben in eine dritte stabile Endlage Z_{O2} möglich. In dieser dritten stabilen Endlage Z_{O2} ist die schwenkbare Klappe 32 in einer fünften Dachflächenebene E₅ angeordnet, wobei der Winkel α5 zwischen der fünften Dachflächenebene E₅ und einer darunter angeordneten horizontalen Ebene E_{H} größer ist als der Winkel α2, α3 zwischen der zweiten Dachflächenebene E₂ und/ oder der dritten Dachflächenebene E₃ und der darunter angeordneten horizontalen Ebene E_{H} und wobei der Winkel α5 der fünften Dachflächenebene E₅ und einer darunter angeordneten horizontalen Ebene E_{H} größer ist als der Winkel α4 zwischen der vierten Dachflächenebene E₄ und der darunter angeordneten horizontalen Ebene E_{H}.

Durch Absenken der oberen Flächenkante 72 der schwenkbaren Klappe 32 kann diese wieder in die zweite stabile Endlage Z_{G} oder in die erste stabile Endlage Z_{O1} mit Öffnung 9 (vgl. Figuren 1 bis 3 und 5 bis 6) überführt werden. Insbesondere sind zwischen der ersten stabilen Endlage Z_{O1} und der zweiten stabilen Endlage Z_{O2} beliebige Neigungen der schwenkbaren Klappe 32 einstellbar. ,

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Firstkonstruktion
- 2: erste Dachfläche
- 2a: auskragender Bereich der ersten Dachfläche
- 3: zweite Dachfläche
- 4: Dachscheitel
- 5: obere Längskante der ersten Dachfläche
- 6: untere Längskante der ersten Dachfläche
- 7: obere Längskante der zweiten Dachfläche
- 8: untere Längskante der zweiten Dachfläche
- 9: Öffnung
- 10: Dichtblech
- 11: Gebäudewand
- 15: Gebäude
- 20: Satteldach
- 32: schwenkbare Klappe
- 40: Hebe- und Senkmechanismus
- 42: Welle
- 44: Zahnstange
- 72: weitere Längskante der schwenkbaren Klappe
- 90: vertikale Öffnung
- α: Winkel
- D: Schwenkachse
- E: Dachflächenebene
- Z_{G}: zweite stabile Endlage
- Z_{O1}: erste stabile Endlage
- Z_{O2}: dritte stabile Endlage

## Patentansprüche

1. Firstkonstruktion (20) eines überdachten Nutzraumes und/oder Gebäudes (15), mit wenigstens zwei zueinander geneigten und einen Firstbereich bildenden Dachflächen (2, 3), in welchem Firstbereich eine erste Längskante (5) einer ersten Dachfläche (2) eine zweite Längskante (7) einer zweiten Dachfläche (3) in vertikaler Richtung unter Ausbildung einer Öffnung (9, 90) überragt und mit einer schwenkbaren Klappe (32), wobei die Firstkonstruktion (20) einen Dachscheitel (4) besitzt, über welchen die erste Dachfläche (2) mit ihrer ersten Längskante (5) hinausragt und welchen Dachscheitel (4) die zweite Dachfläche (3) mit ihrer zweiten Längskante (7) nicht erreicht **dadurch gekennzeichnet, dass** die Klappe (32) im Bereich und an der zweiten Dachfläche (3) zwischen wenigstens zwei stabilen Endlagen (Z_{G}, Z_{O1}, Z_{O2}) zur Variation eines Öffnungsquerschnitts und/oder zum Verschließen der Öffnung (9, 90) schwenkbar gelagert ist und dass durch eine nach unten gerichtete Schwenkbewegung der Klappe (32) aus einer ersten stabilen Endlage (Z_{G}), bei welcher die Öffnung (9, 90) zumindest annäherungsweise verschlossen ist, eine Öffnung (9) mit definiertem Öffnungsquerschnitt ausgebildet wird.

2. Firstkonstruktion (20) nach Anspruch 1, bei welcher die Klappe (32) im Bereich der zweiten Längskante (7) schwenkbar gelagert ist.

3. Firstkonstruktion (20) nach Anspruch 1 oder 2, bei welcher eine Schwenkachse (D) der schwenkbar gelagerten Klappe (32) sich im Wesentlichen parallel zur ersten und zweiten Längskante (5, 7) der ersten und zweiten Dachfläche (2, 3) erstreckt.

4. Firstkonstruktion (20) nach einem oder mehreren der vorhergehenden Ansprüche, bei welcher die schwenkbare Klappe (32) bei einer (Z_{G}) der wenigstens zwei stabilen Endlagen (Z_{G}, Z_{O1}, Z_{O2}) die Öffnung (9, 90) im Wesentlichen vollständig verschließt.

5. Firstkonstruktion (20) nach Anspruch 4, bei welcher die schwenkbare Klappe (32) bei im Wesentlichen vollständig verschlossener Öffnung (9, 90) im Bereich der ersten Längskante (5) an der ersten Dachfläche (2) und/oder an einem oder mehreren an der ersten Dachfläche (2) angeordneten Dichtelementen (10) anliegt.

6. Firstkonstruktion (20) nach einem oder mehreren der vorhergehenden Ansprüche, wobei bei einer (Z_{O2}) der wenigstens zwei stabilen Endlagen (Z_{G}, Z_{O1}, Z_{O2}) der schwenkbaren Klappe (32) eine vertikale Öffnung (90) zwischen der ersten Dachfläche (2) und der zweiten Dachfläche (3) ausgebildet ist.

7. Firstkonstruktion (20) nach einem oder mehreren der vorhergehenden Ansprüche, bei welcher die schwenkbare Klappe (32) bei einer (Z_{O1}) der wenigstens zwei stabilen Endlagen (Z_{G}, Z_{O1}, Z_{O2}) zur Ausbildung einer Öffnung (9) mit definiertem Öffnungsquerschnitt im Wesentlichen parallel zur zweiten Dachfläche (3) orientiert ist.

8. Firstkonstruktion (20) nach einem oder mehreren der vorhergehenden Ansprüche, bei welcher im Bereich der ersten Längskante (5) der ersten Dachfläche (3) ein Dichtelement (10) angeordnet ist.

9. Firstkonstruktion (20) nach einem oder mehreren der vorhergehenden Ansprüche, bei welcher die schwenkbare Klappe (32) zumindest teilweise durch transparentes Material ausgebildet ist.

10. Firstkonstruktion (20) nach Anspruch 9, bei welcher die schwenkbare Klappe (32) aus Glas, Plexiglas, Kunststoff und/oder Folie gebildet ist.

11. Firstkönstruktion (20) nach einem oder mehreren der Ansprüche 1 bis 10, bei welchem die schwenkbare Klappe (32) zur Einnahme der wenigstens zwei stabilen Endlagen (Z_{G}, Z_{O1}, Z_{O2}) mit einem Zahnstangengetriebe (40, 42, 44) in Wirkverbindung gebracht ist.

12. Firstkonstruktion (20) nach Anspruch 11, bei welcher das Zahnstangengetriebe (40, 42, 44) zur Schwenkbewegung der Klappe (32) mit einem motorischen Aktor in Verbindung steht.

13. Firstkonstruktion (20) nach einem oder mehreren der voranstehenden Ansprüche, bei welcher sich die schwenkbare Klappe (32) bei einer (Z_{G}) der wenigstens zwei stabilen Endlagen (Z_{G}, Z_{O1}, Z_{O2}) derart in Richtung der ersten Dachfläche (2) erstreckt, dass die schwenkbare Klappe (32) die erste Dachfläche (2) genau oder zumindest annäherungsweise erreicht und die Öffnung (9) im Wesentlichen verschlossen ist.

14. Firstkonstruktion (20) nach einem oder mehreren der voranstehenden Ansprüche, bei welcher die erste Dachfläche (2) in einer ersten Dachflächenebene (E₁) und die zweite Dachfläche (3) in einer zweiten Dachflächenebene (E₂) angeordnet ist, wobei sich die beiden Ebenen (E₁, E₂) in dem Dachscheitel (4) der Firstkonstruktion (20) schneiden.

## Claims

1. A roof ridge structure (20) for a roofed working space and/or building (15), with at least two roof surfaces (2, 3) inclined toward each other and forming a roof ridge section, in which roof ridge section a first longitudinal edge (5) of a first roof surface (2) projects in a vertical direction above a second longitudinal edge (7) of a second roof surface (3), thereby forming an opening (9, 90), and with a pivotable flap (32), wherein the roof ridge structure (20) has a roof apex (4), above which the first roof surface (2) projects with its first longitudinal edge (5), and which roof apex (4) the second roof surface (3) does not reach with its second longitudinal edge (7),
**characterised in that** the flap (32) is pivotably mounted between at least two stable end positions (Z_{G}, Z_{O1}, Z_{O2}) in the area of and at the second roof surface (3) for the purpose of varying a cross section of the opening and/or for closing the opening (9, 90), and **in that** an opening (9) with a defined cross section of the opening is formed by a downwardly directed pivoting movement of the flap (32) from a first stable end position (Z_{G}) in which the opening (9, 90) is at least approximately closed.

2. The roof ridge structure (20) as recited in claim 1, in which the flap (32) is pivotably mounted in the area of the second longitudinal edge (7).

3. The roof ridge structure (20) as recited in claim 1 or 2, in which a pivot axis (D) of the pivotably mounted flap (32) extends essentially in parallel to the first and to the second longitudinal edge (5, 7) of the first and of the second roof surface (2,3).

4. The roof ridge structure (20) as recited in one or more of the previous claims, in which the pivotable flap (32) essentially completely closes the opening (9, 90) in one (Z_{G}) of the at least two stable end positions (Z_{G}, Z_{O1}, Z_{O2}).

5. The roof ridge structure (20) as recited in claim 4, in which the pivotable flap (32) abuts on the first roof surface (2) in the area of the first longitudinal edge (5) and/or on one or more sealing elements (10) arranged at the first roof surface (2) when the opening (9, 90) is essentially completely closed.

6. The roof ridge structure (20) as recited in one or more of the previous claims,
wherein a vertical opening (90) is formed between the first roof surface (2) and the second roof surface (3) in one (Z_{O2}) of the at least two stable end positions (Z_{G}, Z_{O1}, Z_{O2}) of the pivotable flap (32).

7. The roof ridge structure (20) as recited in one or more of the previous claims, in which the pivotable flap (32) is oriented essentially in parallel to the second roof surface (3) in one (Z_{O1}) of the at least two stable end positions (Z_{G}, Z_{O1}, Z_{O2}) for the purpose of forming an opening (9) with a defined cross section of the opening.

8. The roof ridge structure (20) as recited in one or more of the previous claims, in which a sealing element (10) is arranged in the area of the first longitudinal edge (5) of the first roof surface (3).

9. The roof ridge structure (20) as recited in one or more of the previous claims, in which the pivotable flap (32) is at least partly formed by transparent material.

10. The roof ridge structure (20) as recited in claim 9, in which the pivotable flap (32) is formed from glass, plexiglass, plastic, and/or film.

11. The roof ridge structure (20) as recited in one or more of the claims 1 to 10, wherein the pivotable flap (32) is brought into an operative connection with a rack and pinion drive (40, 42, 44) for the purpose of taking the at least two stable end positions (Z_{G}, Z_{O1}, Z_{O2}).

12. The roof ridge structure (20) as recited in claim 11, in which the rack and pinion drive (40, 42, 44) is in connection with a motoric actuator for the purpose of the pivoting movement of the flap (32).

13. The roof ridge structure (20) as recited in one or more of the previous claims, in which the pivotable flap (32) extends in the direction toward the first roof surface (2) in one (Z_{G}) of the at least two end positions (Z_{G}, Z_{O1}, Z_{O2}) such that the pivotable flap (32) exactly or at least approximately reaches the first roof surface (2) and the opening (9) is essentially closed.

14. The roof ridge structure (20) as recited in one or more of the previous claims, in which the first roof surface (2) is arranged in a first roof surface plane (E₁), and the second roof surface (3) in a second roof surface plane (E₂), wherein the two planes (E₁, E₂) intersect at the roof apex (4) of the roof ridge structure (20).

## Revendications

1. Construction de faîte (20) d'un espace utile et/ou bâtiment (15) couvert d'un toit, avec au moins deux versants de comble (2, 3) inclinés l'un vers l'autre et formant une zone de faîte, dans laquelle zone de faîte, un premier bord longitudinal (5) d'un premier versant de comble (2) dépassant un deuxième bord longitudinal (7) d'un deuxième versant de comble (3) dans la direction verticale tout en formant une ouverture (9, 90), et avec un volet (32) pivotant, ladite construction de faîte (20) présentant un sommet de toit (4) que le premier versant de comble (2) dépasse par son premier bord longitudinal (5), et lequel sommet de toit (4) n'est pas atteint par le deuxième bord longitudinal (7) du deuxième versant de comble (3), **caractérisée par le fait que** ledit volet (32) est logé à pivotement, au niveau du et sur le deuxième versant de comble (3), entre au moins deux positions extrêmes stables (Z_{G}, Zo1, Zo2) de variation d'une section d'ouverture et/ou de fermeture de l'ouverture (9, 90), et que par un mouvement de pivotement dirigé vers le bas du volet (32), à partir d'une première position extrême stable (ZG) dans laquelle ladite ouverture (9, 90) est fermée au moins approximativement, une ouverture (9) à section d'ouverture définie est formée.

2. Construction de faîte (20) selon la revendication 1, dans laquelle le volet (32) est logé à pivotement au niveau du deuxième bord longitudinal (7).

3. Construction de faîte (20) selon la revendication 1 ou 2, dans laquelle un axe de pivotement (D) du volet (32) logé à pivotement s'étend pour l'essentiel parallèlement au premier et deuxième bord longitudinal (5, 7) du premier et deuxième versant de comble (2, 3).

4. Construction de faîte (20) selon l'une ou plusieurs des revendications précédentes, dans laquelle le volet (32) pivotant ferme pour l'essentiel complètement ladite ouverture (9, 90) dans l'une (Z_{G}) desdites au moins deux positions extrêmes stables (Z_{G}, Zo1, Zo2).

5. Construction de faîte (20) selon la revendication 4, dans laquelle le volet (32) pivotant, lorsque ladite ouverture (9, 90) est pour l'essentiel complètement fermée, prend appui, au niveau du premier bord longitudinal (5), sur le premier versant de comble (2) et/ou sur un ou plusieurs éléments d'étanchéité (10) disposés sur le premier versant de comble (2).

6. Construction de faîte (20) selon l'une ou plusieurs des revendications précédentes, dans laquelle, dans l'une (Zo2) desdites au moins deux positions extrêmes stables (Z_{G}, Zo1, Zo2) du volet (32) pivotant, une ouverture verticale (90) est formée entre le premier versant de comble (2) et le deuxième versant de comble (3).

7. Construction de faîte (20) selon l'une ou plusieurs des revendications précédentes, dans laquelle, dans l'une (Zo1) desdites au moins deux positions extrêmes stables (Z_{G}, Zo1, Zo2), le volet (32) pivotant est orienté pour l'essentiel parallèlement au deuxième versant de comble (3) pour former une ouverture (9) à section d'ouverture définie.

8. Construction de faîte (20) selon l'une ou plusieurs des revendications précédentes, dans laquelle un élément d'étanchéité (10) est disposé au niveau du premier bord longitudinal (5) du premier versant de comble (3).

9. Construction de faîte (20) selon l'une ou plusieurs des revendications précédentes, dans laquelle le volet (32) pivotant est réalisé, au moins en partie, à partir d'un matériau transparent.

10. Construction de faîte (20) selon la revendication 9, dans laquelle le volet (32) pivotant est réalisé en verre, en plexiglas, en matière plastique et/ou en feuille.

11. Construction de faîte (20) selon l'une ou plusieurs des revendications 1 à 10, dans laquelle le volet (32) pivotant, pour prendre lesdites au moins deux positions extrêmes stables (Z_{G}, Zo1, Zo2), est mis en liaison active avec un engrenage à crémaillère (40, 42, 44).

12. Construction de faîte (20) selon la revendication 11, dans laquelle, pour le mouvement de pivotement du volet (32), ledit engrenage à crémaillère (40, 42, 44) est en communication avec un actionneur moteur.

13. Construction de faîte (20) selon l'une ou plusieurs des revendications précédentes, dans laquelle, dans l'une (Z_{G)} desdites au moins deux positions extrêmes stables (Z_{G}, Zo1, Zo2), le volet (32) pivotant s'étend dans la direction du premier versant de comble (2) de telle sorte que le volet (32) pivotant atteint exactement ou au moins approximativement le premier versant de comble (2) et que ladite ouverture (9) est pour l'essentiel fermée.

14. Construction de faîte (20) selon l'une ou plusieurs des revendications précédentes, dans laquelle le premier versant de comble (2) et disposé dans un premier plan de versant de comble (E₁) et le deuxième versant de comble (3) et disposé dans un deuxième plan de versant de comble (E₂), les deux plans (E₁, E₂) se coupant dans le sommet de toit (4) de la construction de faîte (20).
